# EUROPÄISCHE PATENTANMELDUNG

(11) **EP 3 614 121 A1**
(43) Veröffentlichungstag der Anmeldung: **26.02.2020**
(21) Anmeldenummer: 18190241.2
(22) Anmeldetag: 22.08.2018
(51) Int. Cl.: G01N 1/12, B22D 29/00, B22D 29/02

(54) **ENTNEHMEN EINER METALLISCHEN PROBE AUS EINER PROBENSONDE**

(71) Anmelder: Primetals Technologies Austria GmbH, 4031 Linz (AT)
(72) Erfinder: Priesner, Andreas, 4020 Linz (AT); Scheidegger, Roger, 4300 St. Valentin (AT)
(74) Vertreter: Metals@Linz

(57) **Zusammenfassung**

Die Erfindung betrifft ein Verfahren und eine Entnahmevorrichtung (19) zum Entnehmen einer metallischen Probe (17) aus einer Probensonde (1), die eine Sondenhülle (8) und einen in der Sondenhülle (8) angeordneten, mit der Probe (17) befüllten Hohlkörper (9) aufweist. Der Hohlkörper (9) wird mit einer Presseinheit (23) aus der Sondenhülle (8) herausgedrückt wird und mit einer Separiereinheit (27) von der Probe (17) separiert.

## Beschreibung

Die Erfindung betrifft ein Verfahren und eine Entnahmevorrichtung zum Entnehmen einer metallischen Probe aus einer Probensonde, die eine Sondenhülle und einen in der Sondenhülle angeordneten, mit der Probe befüllten Hohlkörper aufweist.

Bei der Herstellung von Stahl werden häufig aus einem metallurgischen Gefäß, das Flüssigstahl enthält, metallurgische Proben des Flüssigstahls entnommen. Beispielsweise wird zur Probenentnahme eine Probensonde in das metallurgische Gefäß eingetaucht. Die Probensonden werden beispielsweise an einer Sondenlanze manuell oder automatisiert, z. B. mit einem Roboter, in das metallurgische Gefäß eingeführt und wieder herausgezogen. Eine gezogene Flüssigstahlprobe wird zeitnah gemäß einem standardisierten Verfahren in einem Probenlabor untersucht, wofür entsprechende Analysegeräte bereitstehen.

Eine zur Gewinnung einer Flüssigstahlprobe verwendete Probensonde besteht beispielsweise aus einem Kartonrohr mit einem darin in Formsand eingebrachten Hohlkörper zur Aufnahme von flüssigem Stahl während des Eintauchvorgangs. Der Hohlkörper wird beispielsweise von Schalenelementen gebildet. Das Kartonrohr und der Formsand sorgen aufgrund ihrer geringen Wärmeleitfähigkeit dafür, dass die Schalenelemente selbst nicht aufgeschmolzen werden beziehungsweise sich nicht mit dem flüssigen Stahl in ihrem Inneren verbinden. Üblicherweise sind die den Hohlkörper bildenden, in den Formsand eingebetteten Schalenelemente zusätzlich noch mit einfach zu lösenden Mitteln miteinander verbunden, beispielsweise mit Hilfe eines Klebestreifens, der während der Probennahme schmilzt, oder durch ein mechanisches Klammerelement, welches sich leicht durch mechanische Einwirkung entfernen lässt.

Während die Probenentnahme häufig bereits automatisiert durchgeführt wird, erfolgt die Entnahme der gezogenen Probe aus der Probensonde, das heißt das Entpacken der Probe, in der Regel manuell.

DE 1773164 A1 offenbart eine Vorrichtung zur Entnahme von Proben aus einem Schmelzbad, insbesondere einer Metallschmelze. Zur Längsverschiebung eines zur Entnahme einer Probe bestimmten, zeitweilig in das Bad eintauchenden metallischen Rohres in geneigter Lage ist eine Führung vorgesehen, die eine Schneidvorrichtung zum Ablängen von Rohrendstücken aufweist.

JPS63103970 A offenbart einen Industrieroboter, der automatisch eine Flüssigmetallprobe entnimmt und die gezogene Probe auf einem Probentisch ablegt.

Der Erfindung liegt die Aufgabe zugrunde, ein verbessertes Verfahren zum Entnehmen einer metallischen Probe aus einer Probensonde und eine Entnahmevorrichtung zur Durchführung des Verfahrens anzugeben.

Die Aufgabe wird erfindungsgemäß durch ein Verfahren mit den Merkmalen des Anspruchs 1 und eine Entnahmevorrichtung mit den Merkmalen des Anspruchs 5 gelöst.

Vorteilhafte Ausgestaltungen der Erfindung sind Gegenstand der Unteransprüche.

Bei dem erfindungsgemäßen Verfahren zum Entnehmen einer metallischen Probe aus einer Probensonde, die eine Sondenhülle und einen in der Sondenhülle angeordneten, mit der Probe befüllten Hohlkörper aufweist, wird automatisiert der Hohlkörper aus der Sondenhülle herausgedrückt und der Hohlkörper von der Probe separiert.

Durch die Erfindung kann die Gewinnung einer metallischen Probe wie einer Flüssigstahlprobe vollständig automatisiert werden, da der bisherige Schritt des manuellen Zerlegens der Probensonde automatisiert wird. Dies bedeutet einen Sicherheitsgewinn, da das Zerlegen der Probensonde aus Zeitgründen beziehungsweise aus Gründen der begrenzten Reichweite eines die Probe entnehmenden Roboters in der Nähe des metallurgischen Gefäßes, dem die Probe entnommen wird, durchgeführt wird, was eine erhöhte Gefahrenlage für einen manuellen Bediener beispielsweise durch Verpuffungen (die beispielsweise entstehen, wenn dem Stahlbad Schrott beigegeben wurde, der Wassereinschlüsse enthält), Hitze und/oder giftige Gase oder Dämpfe darstellt.

Eine Ausgestaltung des Verfahrens sieht vor, dass eine Außenoberfläche des Hohlkörpers zwischen dem Herausdrücken des Hohlkörpers aus der Sondenhülle und dem Separieren des Hohlkörpers von der Probe automatisiert mit Luft gereinigt wird. Diese Ausgestaltung des Verfahrens berücksichtigt, dass übliche Probensonden Material wie Formsand und Karton aufweisen, das nach dem Herausdrücken des Hohlkörpers aus der Sondenhülle an dem Hohlkörper haften bleibt und durch einen Luftstrom entfernt werden kann.

Eine weitere Ausgestaltung des Verfahrens sieht vor, dass der Hohlkörper von der Probe separiert wird, indem er einer geneigten Rüttelrinne zugeführt wird, in der der mit der Probe beladene Hohlkörper abwärts gleitet, und der mit der Probe beladene Hohlkörper mit einem über der Rüttelrinne angeordneten, sich um eine Längsachse drehenden Rotor solange in der Rüttelrinne zurückgestoßen wird bis er zerfällt und die Probe freigibt. Diese Ausgestaltung des Verfahrens berücksichtigt, dass der Hohlkörper einer üblichen Probensonde von Schalenelementen gebildet wird, die sich durch mechanische Einwirkung, beispielsweise durch einen Stoß oder Schlag, relativ leicht von der erstarrten Probe lösen lassen. Bei der vorgenannten Ausgestaltung der Erfindung wird eine derartige mechanische Einwirkung durch einen die Probensonde stoßenden Rotor ausgeübt.

Eine weitere Ausgestaltung des Verfahrens sieht vor, dass nach dem Separieren des Hohlkörpers von der Probe die Probe automatisch in eine Ausgabestation geleitet wird. Dadurch kann die Probe in der Ausgabestation gelagert, gegebenenfalls weiterbehandelt und/oder von der Ausgabestation weitergeleitet werden.

Eine erfindungsgemäße Entnahmevorrichtung zur Durchführung des erfindungsgemäßen Verfahrens umfasst eine Presseinheit zum automatischen Herausdrücken des Hohlkörpers aus der Sondenhülle und eine Separiereinheit zum automatischen Separieren des Hohlkörpers von der Probe.

Die Entnahmevorrichtung ermöglicht die Durchführung des erfindungsgemäßen Verfahrens mit den oben bereits bereits genannten Vorteilen. Ferner ermöglicht sie eine kostengünstige Nachrüstlösung für bestehende metallurgische Anlagen, da die bisher verwendeten Probensonden weiterhin verwendet werden können und ein Roboter, der bereits die Probengewinnung vollautomatisch durchführt, mit sehr geringem Aufwand dahingehend umprogrammiert werden kann, dass eine Probensonde nach Gewinnung der Probe durch den Roboter der erfindungsgemäßen Entnahmevorrichtung zugeführt wird, in der sie dann entpackt wird.

Eine Ausgestaltung der Entnahmevorrichtung sieht vor, dass die Presseinheit zum Herausdrücken des Hohlkörpers aus der Sondenhülle einen linear verfahrbaren Stempel aufweist. Diese Ausgestaltung der Entnahmevorrichtung berücksichtigt, dass die Hohlkörper üblicher Probensonden nur von Formsand und Kartonrohr umgeben sind und daher am einfachsten durch Druck aus dem Formsand und Kartonrohr gelöst werden können, da der Formsand eine relativ geringe Festigkeit bei großer Sprödigkeit aufweist, weshalb er leicht durch einen Stempel zertrümmert werden kann. Ein Zersägen der Probensonde wäre dagegen nachteilig, da sich dafür benötigte Schneidmittel durch den Formsand schnell abnutzen würden.

Eine weitere Ausgestaltung der Entnahmevorrichtung sieht vor, dass die Separiereinheit eine geneigte Rüttelrinne, in der der mit der Probe beladene Hohlkörper abwärts gleitet, und einen über der Rüttelrinne angeordneten, um seine Längsachse drehbaren Rotor aufweist. Der mit der Probe beladene Hohlkörper wird durch den Rotor solange in der Rüttelrinne zurückgestoßen bis er zerfällt und die Probe freigibt. Der Rotor ist in einem Abstand von der Rüttelrinne angeordnet, der verhindert, dass der mit der Probe beladene Hohlkörper unter dem Rotor hindurchgleitet, und ermöglicht, dass die Teile des zerfallenen Hohlkörpers und die Probe unter dem Rotor hindurchgleiten. Diese Ausgestaltung der Entnahmevorrichtung berücksichtigt einerseits wiederum, dass der Hohlkörper einer üblichen Probensonde von Schalenelementen gebildet wird, die sich durch eine mechanische Einwirkung des Rotors relativ leicht von der erstarrten Probe lösen lassen. Ferner berücksichtigt die Ausgestaltung, dass der Hohlkörper vor dem Zerfallen eine größere Dicke als seine Einzelteile und die Probe aufweist, so dass der Abstand des Rotors zu der Rüttelrinne in einfacher Weise genutzt werden kann, um die Teile des zerfallenen Hohlkörpers und die Probe nach dem Zerfallen des Hohlkörpers an dem Rotor vorbei zu leiten.

Eine weitere Ausgestaltung der Entnahmevorrichtung sieht eine Filterungseinheit, eine Ausgabestation und einen Auffangbehälter vor, wobei die Probe und die Teile des zerfallenen Hohlkörpers von der Separiereinheit an die Filterungseinheit ausgegeben werden und die Filterungseinheit die Probe in die Ausgabestation und die Teile des zerfallenen Hohlkörpers in den Auffangbehälter leitet. Die Filterungseinheit weist beispielsweise eine Vibrationsrutsche auf, auf der Separierrechen angeordnet sind, die die Teile des zerfallenen Hohlkörpers zu dem Auffangbehälter passieren lassen und die Probe in die Ausgabestation leiten. Durch die Filterungseinheit werden die Probe und die Teile des zerfallenen Hohlkörpers räumlich voneinander getrennt, so dass nur die Probe in die Ausgabestation geleitet wird. Die Ausführung der Filterungseinheit mit einer Vibrationsrutsche der genannten Eigenschaften berücksichtigt, dass die Teile des zerfallenen Hohlkörpers (wie Schalenelemente und gegebenenfalls ein Klammerelement, durch das die Schalenelemente zusammengehlaten wurden) üblicherweise geringere Dicken als die Probe haben, so dass diese unterschiedlichen Dicken genutzt werden können, um auf einfache Weise die Probe von den Teilen des zerfallenen Hohlkörpers durch siebartig wirkende Separierrechen zu trennen.

Eine weitere Ausgestaltung der Entnahmevorrichtung sieht vor, dass die Ausgabestation zur Kühlung der Probe ausgebildet ist. Dadurch kann die Temperatur der Probe zu deren späteren Weiterbehandlung vorteilhaft gesenkt werden.

Eine weitere Ausgestaltung der Entnahmevorrichtung sieht eine Versendeeinheit zum automatischen Verpacken und Versenden der Probe vor. Beispielsweise ist die Versendeeinheit zum Versenden der Probe als Rohrpost ausgebildet. Dies ermöglicht ein automatisiertes Versenden der Probe beispielsweise an ein Labor zur Untersuchung der Probe.

Eine weitere Ausgestaltung der Entnahmevorrichtung sieht eine Reinigungseinheit zum automatischen Reinigen einer Außenoberfläche des Hohlkörpers mit Luft zwischen dem Herausdrücken des Hohlkörpers aus der Sondenhülle mit der Presseinheit und dem Separieren des Hohlkörpers von der Probe mit der Separiereinheit vor. Beispielsweise weist die Reinigungseinheit wenigstens eine Luftdüse zur Ausgabe von Luft auf die Außenoberfläche des Hohlkörpers auf. Wie oben bereits ausgeführt wurde, kann dadurch Material wie Formsand und Karton, das nach dem Herausdrücken des Hohlkörpers aus der Sondenhülle an dem Hohlkörper haften bleibt, durch einen Luftstrom entfernt werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
FIG 1 eine Querschnittsdarstellung einer Probensonde,
FIG 2 eine perspektivische Darstellung eines Schalenelements einer Probensonde,
FIG 3 eine perspektivische Darstellung eines Klammerelements einer Probensonde,
FIG 4 eine perspektivische Darstellung einer erstarrten Probe,
FIG 5 eine perspektivische Darstellung einer Entnahmevorrichtung zum Entnehmen einer metallischen Probe aus einer Probensonde,
FIG 6 eine Seitenansicht der in Figur 5 gezeigten Entnahmevorrichtung,
FIG 7 eine Draufsicht auf die in den Figuren 5 und 6 gezeigte Entnahmevorrichtung,
FIG 8 eine perspektivische Darstellung eines Einführtrichters der in den Figuren 5 bis 7 gezeigten Entnahmevorrichtung beim Einführen einer Probensonde,
FIG 9 eine perspektivische Darstellung der in den Figuren 5 bis 7 gezeigten Entnahmevorrichtung im Bereich einer Presseinheit,
FIG 10 eine erste perspektivische Darstellung der in den

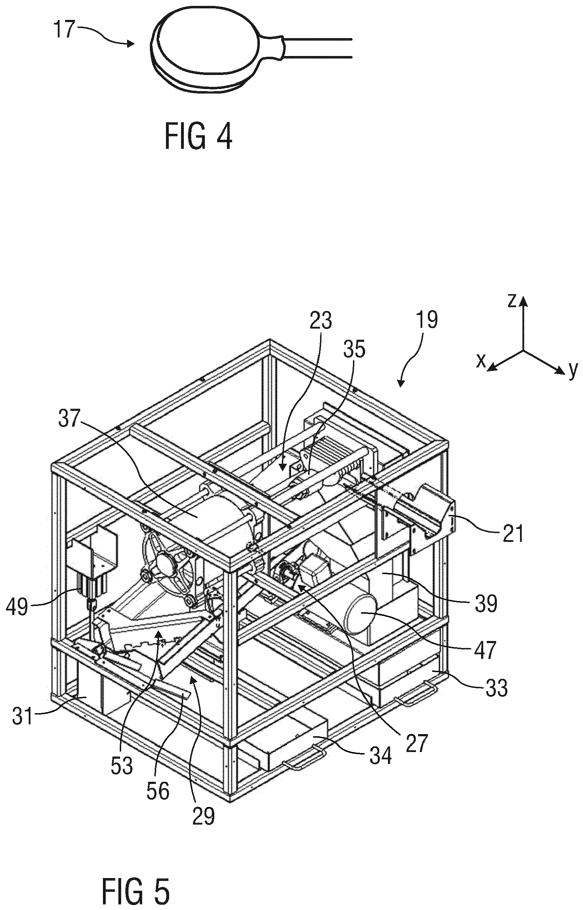

Figuren 5 bis 7 gezeigten Entnahmevorrichtung im Bereich einer Separiereinheit,

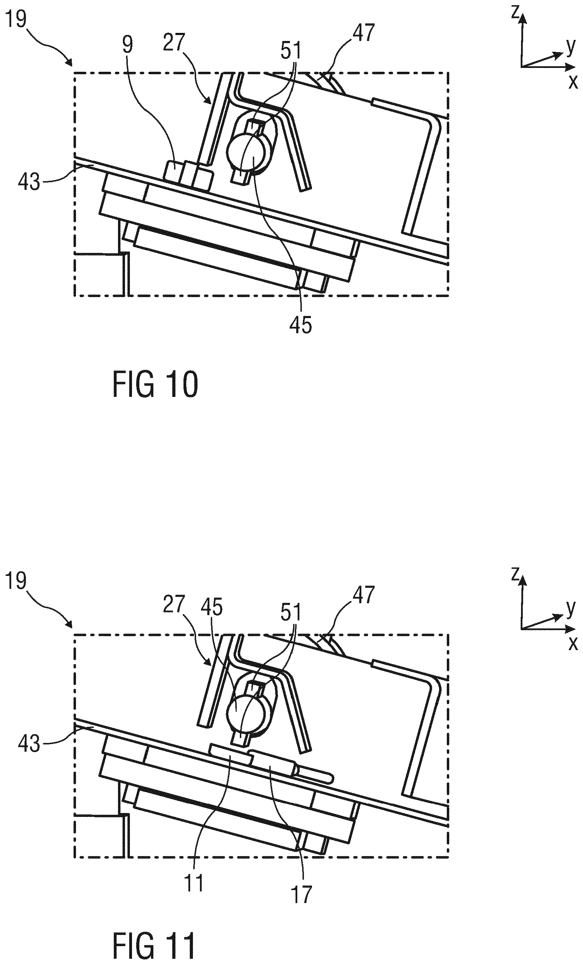

FIG 11 eine zweite perspektivische Darstellung der in den
Figuren 5 bis 7 gezeigten Entnahmevorrichtung im Bereich der Separiereinheit,

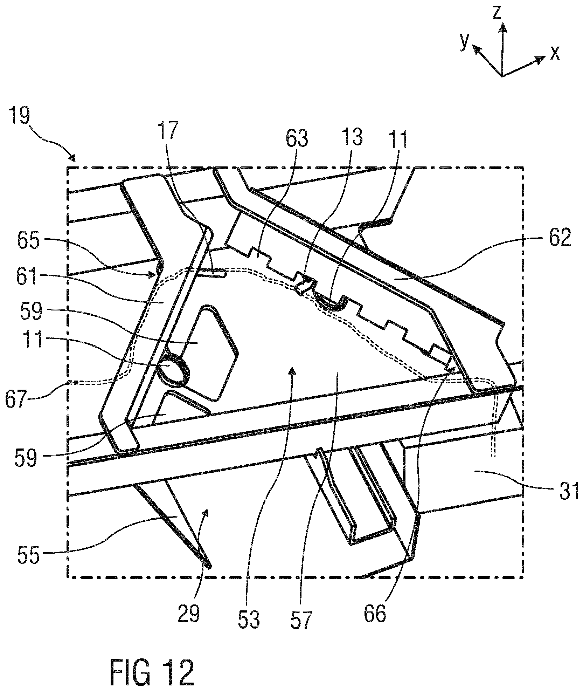

FIG 12 eine perspektivische Darstellung der in den Figuren 5 bis 7 gezeigten Entnahmevorrichtung im Bereich einer Filterungseinheit,

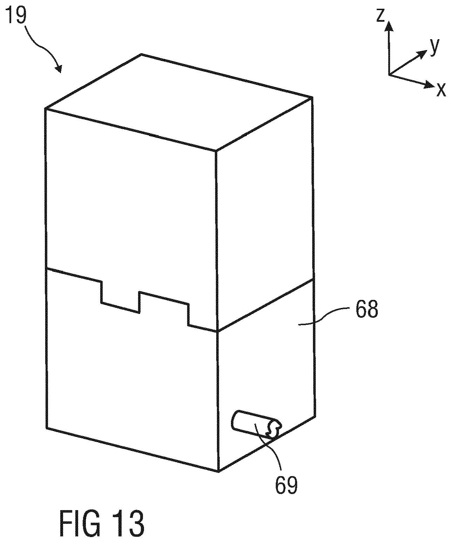

FIG 13 eine schematische perspektivische Darstellung einer Entnahmevorrichtung mit einer Versendeeinheit zum Versenden einer Probe.

Einander entsprechende Teile sind in den Figuren mit denselben Bezugszeichen versehen.

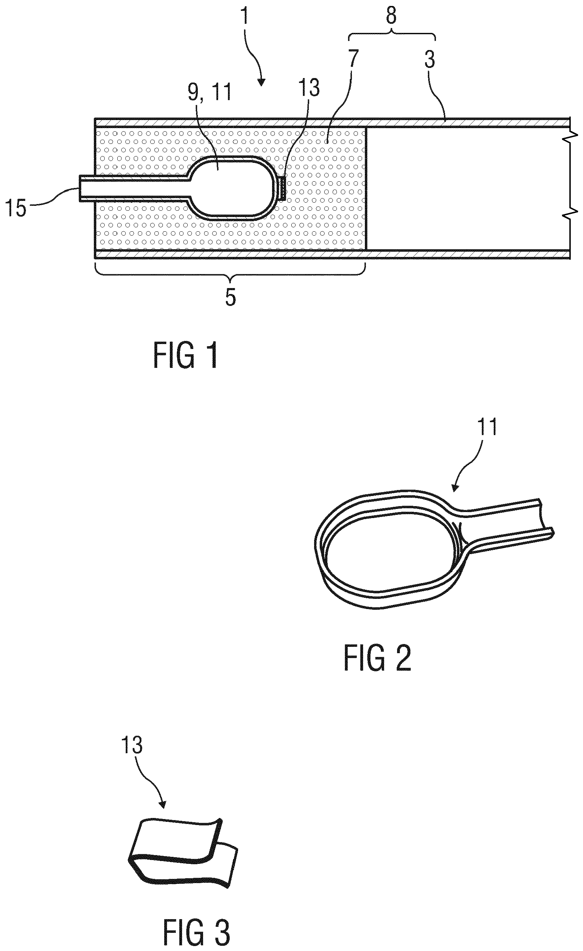

Figur 1 zeigt eine Querschnittsdarstellung einer Probensonde 1. Die Probensonde 1 besteht aus einem Kartonrohr 3, das einen Endbereich 5 aufweist, in den Formsand 7 und ein darin eingebetteter Hohlkörper 9 eingebracht sind. Der Hohlkörper 9 wird von zwei zueinander korrespondierenden Schalenelementen 11 gebildet. Der Formsand 7 und das Kartonrohr 3 bilden eine Sondenhülle 8 der Probensonde 1.

Figur 2 zeigt eine perspektivische Darstellung eines Schalenelements 11. Jedes Schalenelement 11 ist pfannenartig ausgebildet. Die Schalenelemente 11 werden durch ein Klammerelement 13 zusammengehalten.

Figur 3 zeigt eine perspektivische Darstellung des Klammerelements 13. Statt durch das Klammerelement 13 können die Schalenelemente 11 beispielsweise auch durch einen Klebestreifen zusammengehalten werden.

Der von den Schalenelementen 11 gebildete Hohlkörper 9 weist eine Hohlkörperöffnung 15 auf, die aus dem Formsand 7 und dem Kartonrohr 3 herausragt. Mit der Probensonde 1 wird eine Probe 17 aus einer metallischen Schmelze, beispielsweise aus einem Flüssigstahl, entnommen. Dazu wird die Probensonde 1 in die Schmelze eingetaucht, beispielsweise manuell oder automatisiert von einem Roboter. Durch die Hohlkörperöffnung 15 fließt Schmelze, die die Probe 17 bildet, in den Hohlkörper 9. Das Kartonrohr 3 und der Formsand 7 sorgen aufgrund ihrer geringen Wärmeleitfähigkeit dafür, dass die Schalenelemente 11 selbst nicht aufgeschmolzen werden beziehungsweise sich nicht mit der Schmelze in ihrem Inneren verbinden. Die Probe 17 erstarrt relativ schnell in dem Hohlkörper 9.

Figur 4 zeigt eine perspektivische Darstellung der erstarrten Probe 17.

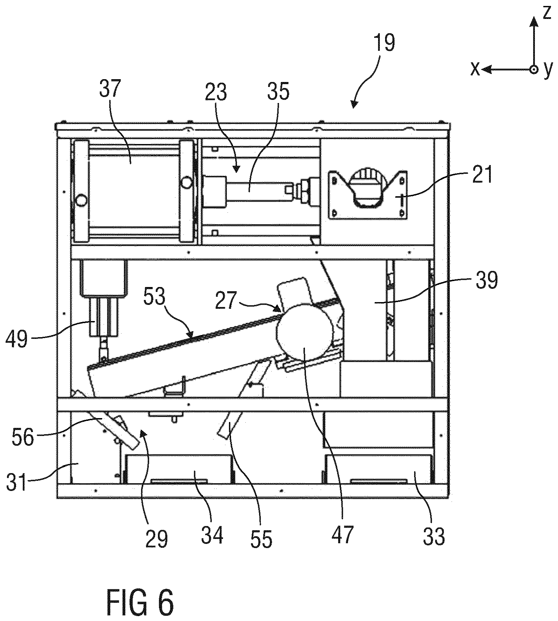

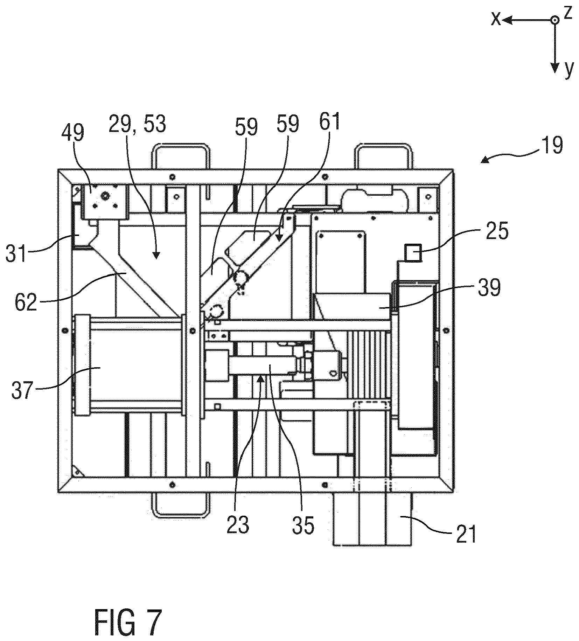

Die Figuren 5 bis 7 zeigen verschiedene Darstellungen einer Entnahmevorrichtung 19 zum automatisierten Entnehmen der Probe 17 aus der Probensonde 1. Figur 5 zeigt eine perspektivische Darstellung der Entnahmevorrichtung 19, Figur 6 zeigt eine Seitenansicht der Entnahmevorrichtung 19 und Figur 7 zeigt eine Draufsicht auf die Entnahmevorrichtung 19. Zum besseren Verständnis ist in den Figuren 5 bis 13 jeweils auch ein kartesisches Koordinatensystem mit Koordinaten X, Y, Z eingezeichnet.

Die Entnahmevorrichtung 19 umfasst einen Einführtrichter 21, eine Presseinheit 23, eine Reinigungseinheit 25, eine Separiereinheit 27, eine Filterungseinheit 29, eine Ausgabestation 31 und zwei Auffangbehälter 33, 34. Der Einführtrichter 21 und die Presseinheit 23 sind in einem oberen Bereich der Entnahmevorrichtung 19 angeordnet. Die Reinigungseinheit 25, die Separiereinheit 27 und die Filterungseinheit 29 sind in einem mittleren Bereich der Entnahmevorrichtung 19 angeordnet. Die Ausgabestation 31 und die Auffangbehälter 33, 34 sind in einem unteren Bereich der Entnahmevorrichtung 19 angeordnet.

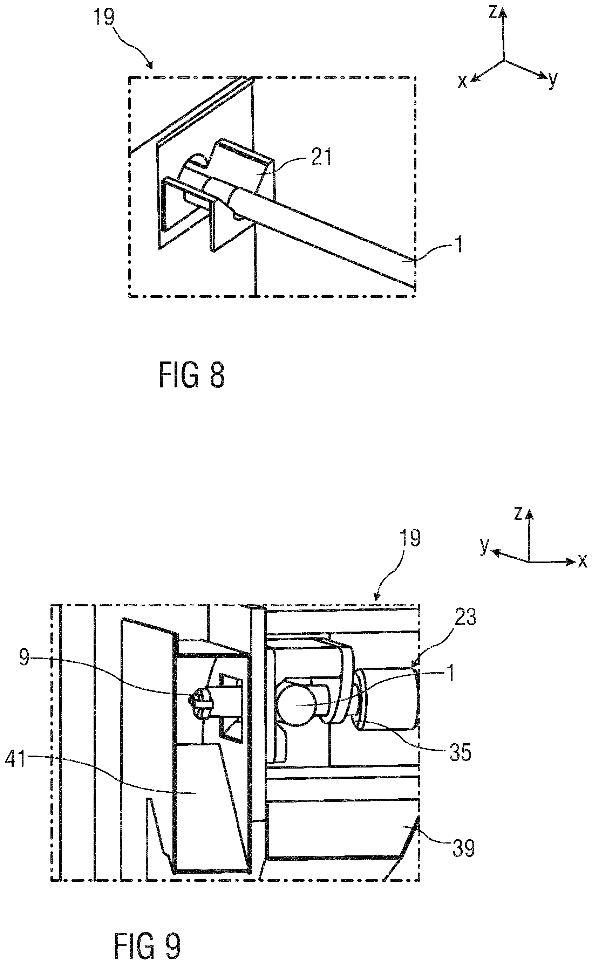

Figur 8 zeigt eine perspektivische Darstellung des Einführtrichters 21 beim Einführen der Probensonde 1. Die Probensonde 1 wird beispielsweise manuell oder automatisiert durch einen Robotor in den Einführtrichter 21 gelegt und in die Entnahmevorrichtung 19 geschoben.

Figur 9 zeigt eine perspektivische Darstellung der Entnahmevorrichtung 19 im Bereich der Presseinheit 23. Die Presseinheit 23 weist einen linear verfahrbaren Stempel 35 und einen Stempelantrieb 37, mit dem der Stempel 35 angetrieben wird, auf. Mit dem Stempel 35 wird der mit der Probe 17 beladene Hohlkörper 9 aus dem Formsand 7 und dem Kartonrohr 3 der Probensonde 1 senkrecht zu einer Längsachse der Probensonde 1 herausgedrückt. Dabei wird die Probensonde 1 zerstört. Von der Probensonde 1 abbrechende Teile des Kartonrohrs 3 und des Formsands 7 fallen in einen unterhalb der Position, in der der Stempel 35 auf die Probensonde 1 trifft, angeordneten Abführtrichter 39, der sie in einen ersten Auffangbehälter 33 leitet. Der mit der Probe 17 beladene Hohlkörper 9 fällt auf eine Zuführrutsche 41, die ihn zu der Separiereinheit 27 leitet.

Die Reinigungseinheit 25 ist zwischen der Presseinheit 23 und der Separiereinheit 27 auf der Höhe der Zuführrutsche 41 angeordnet. Die Reinigungseinheit 25 ist zum Reinigen einer Außenoberfläche des Hohlkörpers 9 von an der Außenoberfläche des Hohlkörpers 9 verbleibenden Resten des Formsands 7 und des Kartonrohrs 3 ausgebildet. Dazu weist die Reinigungseinheit 25 beispielsweise wenigstens eine Luftdüse zur Ausgabe von Luft auf die Außenoberfläche des Hohlkörpers 9 auf. Die von der Außenoberfläche des Hohlkörpers 9 geblasenen Reste des Formsands 7 und des Kartonrohrs 3 fallen in den ersten Auffangbehälter 33.

Die Figuren 10 und 11 zeigen jeweils eine perspektivische Darstellung der Entnahmevorrichtung 19 im Bereich der Separiereinheit 27. Mit der Separiereinheit 27 werden die Probe 17 und der Hohlkörper 9 voneinander getrennt, wobei der Hohlkörper 9 in die Schalenelemente 11 und das Klammerelement 13 zerlegt wird. Figur 10 zeigt die Separiereinheit 27 und den noch mit der Probe 17 beladenen Hohlkörper 9 vor der Zerlegung des Hohlkörpers 9. Figur 11 zeigt die Separiereinheit 27, die Probe 17 und ein Schalenelement 11 nach der Zerlegung des Hohlkörpers 9.

Die Separiereinheit 27 umfasst eine geneigte Rüttelrinne 43, einen um seine Längsachse drehbaren Rotor 45, einen Rotorantrieb 47, der den Rotor 45 antreibt, und einen Rüttelantrieb 49, der die Rüttelrinne 43 in eine Rüttelbewegung versetzt. Der Rotor 45 weist zwei senkrecht zu seiner Längsachse von ihm nach außen abstehende Rotornasen 51 auf.

In der Rüttelrinne 43 gleitet der mit der Probe 17 beladene Hohlkörper 9 abwärts auf den Rotor 45 zu, wobei die Rüttelbewegung der Rüttelrinne 43 verhindert, dass der Hohlkörper 9 aufgrund seiner Haftreibung mit der Rüttelrinne 43 stehen bleibt. Der Rotor 45 ist in einem Abstand über der Rüttelrinne 43 angeordnet, der verhindert, dass der mit der Probe 17 beladene Hohlkörper 9 unter dem Rotor 45 hindurchgleitet, und ermöglicht, dass die Probe 17 und die Teile des zerfallenen Hohlkörpers 9, das heißt die Schalenelemente 11 und das Klammerelement 13, unter dem Rotor 45 hindurchgleiten. Von den Rotornasen 51 des sich drehenden Rotors 45 wird der mit der Probe 17 beladene Hohlkörper 9 solange in der Rüttelrinne 43 zurückgestoßen bis er zerfällt und die Probe 17 freigibt. Danach gleiten die Probe 17 und die Teile 11, 13 des zerfallenen Hohlkörpers 9 auf der Rüttelrinne 43 unter dem Rotor 45 hindurch und zu der Filterungseinheit 29.

Figur 12 zeigt eine perspektivische Darstellung der Entnahmevorrichtung 19 im Bereich der Filterungseinheit 29. Die Filterungseinheit 29 weist eine sich an die Rüttelrinne 43 anschließende Vibrationsrutsche 53 und zwei darunter angeordnete Abführrutschen 55, 56 auf. Die Vibrationsrutsche 53 wird gemeinsam mit der Rüttelrinne 43 durch den Rüttelantrieb 49 in eine Rüttelbewegung versetzt.

Die Vibrationsrutsche 53 weist eine Bodenplatte 57 mit Bodenausnehmungen 59 und zwei über der Bodenplatte 57 angeordnete Separierrechen 61, 62 auf, die miteinander einen Winkel von etwa 90 Grad bilden. Die Separierrechen 61, 62 sind in einem Abstand von der Bodenplatte 57 angeordnet, der es verhindet, dass die Probe 17 unter ihnen hindurchgleitet, aber ermöglicht, dass die Schalenelemente 11 unter ihnen hindurchgleiten. Ferner weist jeder Separierrechen 61, 62 bodenplattenseitige Rechenausnehmungen 63 auf, durch die das Klammerelement 13 hindurchtreten kann. Ferner weist ein erster, der Separiereinheit 27 zugewandter Separierrechen 61 eine Einlassöffnung 65 auf, durch die die Probe 17 in einen Bereich zwischen den beiden Separierrechen 61, 62 hindurchtreten kann. Der zweite, von der Separiereinheit 27 abgewandte Separierrechen 62 weist eine Auslassöffnung 66 auf, durch die die Probe 17 den Bereich zwischen den beiden Separierrechen 61, 62 verlassen kann. Die Einlassöffnung 65 und die Auslassöffnung 66 sind auf einander entgegengesetzten Seiten der Vibrationsrutsche 53 angeordnet, so dass sich die Probe 17 auf dem Weg von der Einlassöffnung 65 zu der Auslassöffnung 66 entlang des zweiten Separierrechens 62 bewegt.

Die Probe 17 gleitet von der Separiereinheit 27 zu der Vibrationsrutsche 53, durch die Einlassöffnung 65, von dort zu der Auslassöffnung 66, verlässt die Vibrationsrutsche 53 durch die Auslassöffnung 66 und fällt in die unter der Auslassöffnung 66 angeordnete Ausgabestation 31. Beispielhaft ist eine entsprechende Trajektorie 67 der Probe 17 in Figur 12 gestrichelt gezeichnet.

Ein Schalenelement 11 gleitet unter dem ersten Separierrechen 61 hindurch in den Bereich zwischen den beiden Separierrechen 61, 62 und fällt danach entweder durch eine Bodenausnehmung 59 direkt oder über eine erste Abführrutsche 55 in den unter der Vibrationsrutsche 53 angeordneten zweiten Auffangbehälter 34 oder gleitet von dem ersten Separierrechen 61 zu dem zweiten Separierrechen 62 und danach unter dem zweiten Separierrechen 62 hindurch und fällt schließlich direkt oder über die zweite Abführrutsche 56 in den zweiten Auffangbehälter 34.

Das Klammerelement 13 gleitet durch eine Rechenausnehmung 63 in dem ersten Separierrechen 61 in den Bereich zwischen den beiden Separierrechen 61, 62 und fällt danach entweder durch eine Bodenausnehmung 59 direkt oder über eine erste Abführrutsche 55 in den zweiten Auffangbehälter 34 oder gleitet von dem ersten Separierrechen 61 zu dem zweiten Separierrechen 62 und danach durch eine Rechenausnehmung 63 in dem zweiten Separierrechen 62 und fällt schließlich direkt oder über die zweite Abführrutsche 56 in den zweiten Auffangbehälter 34.

Die Ausgabestation 31 kann beispielsweise zur Kühlung der Probe 17, beispielsweise durch ein Kühlfluid, insbesondere durch Luft oder Wasser, ausgebildet sein.

Figur 13 zeigt schematisch eine perspektivische Darstellung einer Entnahmevorrichtung 19, die sich von der in den Figuren 1 bis 12 gezeigten Entnahmevorrichtung 19 lediglich dadurch unterscheidet, dass unter der Ausgabestation 31 und den Auffangbehältern 33, 34 eine Versendeeinheit 68 zum automatischen Verpacken und Versenden der Probe 17 angeordnet ist. Beispielsweise ist die Versendeeinheit 68 zum Versenden der Probe 17 als Rohrpost ausgebildet und weist dafür einen Rohrausgang 69 auf.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Probensonde
- 3: Kartonrohr
- 5: Endbereich
- 7: Formsand
- 8: Sondenhülle
- 9: Hohlkörper
- 11: Schalenelement
- 13: Klammerelement
- 15: Hohlkörperöffnung
- 17: Probe
- 19: Entnahmevorrichtung
- 21: Einführtrichter
- 23: Presseinheit
- 25: Reinigungseinheit
- 27: Separiereinheit
- 29: Filterungseinheit
- 31: Ausgabestation
- 33, 34: Auffangbehälter
- 35: Stempel
- 37: Stempelantrieb
- 39: Abführtrichter
- 41: Zuführrutsche
- 43: Rüttelrinne
- 45: Rotor
- 47: Rotorantrieb
- 49: Rüttelantrieb
- 51: Rotornase
- 53: Vibrationsrutsche
- 55, 56: Abführrutsche
- 57: Bodenplatte
- 59: Bodenausnehmung
- 61, 62: Separierrechen
- 63: Rechenausnehmung
- 65: Einlassöffnung
- 66: Auslassöffnung
- 67: Trajektorie
- 68: Versendeeinheit
- 69: Rohrausgang
- X, Y, Z: kartesische Koordinate

## Patentansprüche

1. Verfahren zum Entnehmen einer metallischen Probe (17) aus einer Probensonde (1), die eine Sondenhülle (8) und einen in der Sondenhülle (8) angeordneten, mit der Probe (17) befüllten Hohlkörper (9) aufweist, wobei automatisiert
- der Hohlkörper (9) aus der Sondenhülle (8) herausgedrückt wird und
- der Hohlkörper (9) von der Probe (17) separiert wird.

2. Verfahren nach Anspruch 1, wobei eine Außenoberfläche des Hohlkörpers (9) zwischen dem Herausdrücken des Hohlkörpers (9) aus der Sondenhülle (8) und dem Separieren des Hohlkörpers (9) von der Probe (17) automatisiert mit Luft gereinigt wird.

3. Verfahren nach Anspruch 1 oder 2, wobei der Hohlkörper (9) von der Probe (17) separiert wird, indem er einer geneigten Rüttelrinne (43) zugeführt wird, in der der mit der Probe (17) beladene Hohlkörper (9) abwärts gleitet, und der mit der Probe (17) beladene Hohlkörper (9) mit einem über der Rüttelrinne (43) angeordneten, sich um eine Längsachse drehenden Rotor (45) solange in der Rüttelrinne (43) zurückgestoßen wird bis er zerfällt und die Probe (17) freigibt.

4. Verfahren nach einem der vorhergehenden Ansprüche, wobei nach dem Separieren des Hohlkörpers (9) von der Probe (17) die Probe (17) automatisch in eine Ausgabestation (31) geleitet wird.

5. Entnahmevorrichtung (19) zur Durchführung des Verfahrens gemäß einem der vorhergehenden Ansprüche, die Entnahmevorrichtung (19) umfassend
- eine Presseinheit (23) zum automatischen Herausdrücken des Hohlkörpers (9) aus der Sondenhülle (8) und
- eine Separiereinheit (27) zum automatischen Separieren des Hohlkörpers (9) von der Probe (17).

6. Entnahmevorrichtung (19) nach Anspruch 5, wobei die Presseinheit (23) zum Herausdrücken des Hohlkörpers (9) aus der Sondenhülle (8) einen linear verfahrbaren Stempel (35) aufweist.

7. Entnahmevorrichtung (19) nach Anspruch 5 oder 6, wobei die Separiereinheit (27) eine geneigte Rüttelrinne (43), in der der mit der Probe (17) beladene Hohlkörper (9) abwärts gleitet, und einen über der Rüttelrinne (43) angeordneten, um seine Längsachse drehbaren Rotor (45) aufweist, wobei der mit der Probe (17) beladene Hohlkörper (9) durch den Rotor (45) solange in der Rüttelrinne (43) zurückgestoßen wird bis er zerfällt und die Probe (17) freigibt, und wobei der Rotor (45) in einem Abstand von der Rüttelrinne (43) angeordnet ist, der verhindert, dass der mit der Probe (17) beladene Hohlkörper (9) unter dem Rotor (45) hindurchgleitet, und ermöglicht, dass die Teile (11, 13) des zerfallenen Hohlkörpers (9) und die Probe (17) unter dem Rotor (45) hindurchgleiten.

8. Entnahmevorrichtung (19) nach Anspruch 7 mit einer Filterungseinheit (29), einer Ausgabestation (31) und einem Auffangbehälter (34), wobei die Probe (17) und die Teile (11, 13) des zerfallenen Hohlkörpers (9) von der Separiereinheit (27) an die Filterungseinheit (29) ausgegeben werden und die Filterungseinheit (29) die Probe (17) in die Ausgabestation (31) und die Teile (11, 13) des zerfallenen Hohlkörpers (9) in den Auffangbehälter (34) leitet.

9. Entnahmevorrichtung (19) nach Anspruch 8, wobei die Filterungseinheit (29) eine Vibrationsrutsche (53) aufweist, auf der Separierrechen (61, 62) angeordnet sind, die die Teile (11, 13) des zerfallenen Hohlkörpers (9) zu dem Auffangbehälter (34) passieren lassen und die Probe (17) in die Ausgabestation (31) leiten.

10. Entnahmevorrichtung (19) nach Anspruch 8 oder 9, wobei die Ausgabestation (31) zur Kühlung der Probe (17) ausgebildet ist.

11. Entnahmevorrichtung (19) nach einem der Ansprüche 5 bis 10 mit einer Versendeeinheit (68) zum automatischen Verpacken und Versenden der Probe (17).

12. Entnahmevorrichtung (19) nach Anspruch 11, wobei die Versendeeinheit (68) zum Versenden der Probe (17) als Rohrpost ausgebildet ist.

13. Entnahmevorrichtung (19) nach einem der Ansprüche 5 bis 12 mit einer Reinigungseinheit (25) zum automatischen Reinigen einer Außenoberfläche des Hohlkörpers (9) mit Luft zwischen dem Herausdrücken des Hohlkörpers (9) aus der Sondenhülle (8) mit der Presseinheit (23) und dem Separieren des Hohlkörpers (9) von der Probe (17) mit der Separiereinheit (27).

14. Entnahmevorrichtung (19) nach Anspruch 13, wobei die Reinigungseinheit (25) wenigstens eine Luftdüse zur Ausgabe von Luft auf die Außenoberfläche des Hohlkörpers (9) aufweist.
